# EUROPEAN PATENT SPECIFICATION

(11) **EP 2 069 130 B1**
(45) Date of publication and mention of the grant of the patent: **19.12.2018**
(21) Application number: 07870710.6
(22) Date of filing: 29.06.2007
(51) Int. Cl.: B29C 70/46, B64C 1/14, B29C 70/44, B29L 31/00

(54) **IMPROVED COMPOSITE RESIN WINDOW FRAME CONSTRUCTION FOR AIRPLANES AND METHOD OF PRODUCING THE SAME**
VERBESSERTE VERBUNDHARZ-FENSTERRAHMENKONSTRUKTION FÜR FLUGZEUGE UND VERFAHREN ZU IHRER HERSTELLUNG
CONSTRUCTIONS AMÉLIORÉES DE CADRES DE HUBLOT EN RÉSINE COMPOSITE DESTINÉES À DES AVIONS

(30) Priority: 15.08.2006 US 464517
(43) Date of publication of application: 17.06.2009
(73) Proprietor: The Boeing Company, Chicago, IL 60606-1596 (US)
(72) Inventor: BAGGETTE, Phillip D., Sammamish, WA 98074 (US); BRIGMAN, Richard W., Everett, WA 98203 (US); DOPKER, Bernhard, Bellevue, WA 98008-5708 (US); JOHNSON, Robert W., Kirkland, WA 98033 (US); SANDYS, Jeffery P., Shoreline, WA 98177 (US)
(74) Representative: Boult Wade Tennant LLP
(86) International application number: PCT/US2007/015163
(87) International publication number: WO 2008/063247

(56) References cited:
- EP-A- 0 249 889
- EP-A- 1 642 826
- WO-A-83/01237
- WO-A-2005/115836

## Description

### BACKGROUND OF THE INVENTION - FIELD OF THE INVENTION

The present invention provides manufacturing improvements for airplanes utilizing composite resin window frame constructions.

### BACKGROUND OF THE INVENTION - PRIOR ART

Airplane window frame assemblies must be sufficiently strong to hold a window transparency in place while compensating for any loss of strength where the fuselage skin is pierced to receive the transparency. Airplane window frame assemblies are generally fabricated from metal constructions that offer strength but which traditionally suffer from weight concerns and corrosion deficiencies. Window transparency is intended to mean a transparent window element, namely a window pane. However, "pane" should not be given a narrow construction to mean only a glass pane. As will become clear in the following description, panes made from other transparent materials like stretched acrylic are intended to be encompassed by the terms "window transparency" and "window pane".

Aluminum fuselages on current airplanes have forged window frames in combination with window belts having localized doublers around the windows. The upstanding flange used in prior art aluminum frames prevents skin buckling through and near the window cutout. The upstanding flange on such window frames is commonplace on aluminum airplanes and it also serves to guide installation of the window into place during assembly.

In contrast to forging the frame out of aluminum, fabricating the upstanding leg with composite resin is comparatively difficult and expensive because its shape is difficult to mold. Its profile is generally a T-shaped part which can be difficult to remove from a composite resin mold.

Composite frame assemblies utilizing molded resin and the like have been investigated but have heretofore exhibited additional problems. For example, published PCT application WO 2005/115836 A1 utilizes composite resin in a window frame assembly but the construction profile requires an upstanding or vertical leg in order to stiffen the window frame. This additional flange structure adds weight, cost and complication to the frame and its fabrication. The upstanding leg also presents manufacturing difficulties due to its more complex shape.

EP 0,249,889 A2 discloses a composite resin window frame.

### BACKGROUND OF THE INVENTION - OBJECTS AND ADVANTAGES

One extraordinary advantage of the present composite resin frame design is the removal of the upstanding leg which significantly reduces the weight of the part and also eases the difficulty of making the window frame with composite resins.

Another outstanding feature of the present invention is the recognition that an airplane fuselage skin can be utilized to carry the load which is displaced when the fuselage is pierced to provide a window aperture. The composite window frame carries the window pane and any associated loads.

Heretofore, no other methods have existed to eliminate the need for the upstanding reinforcement leg in prior art composite window frame assemblies. The present design and method provides a lower risk, lighter weight, less costly solution to using composite window frames in conjunction with a composite airplane fuselage.

The present design also provides a flatter window frame system or assembly, thereby enabling easier fabrication and installation. Furthermore, any required skin gage increase can be localized at the site of the window frame installation.

The present composite resin window frame design also ensures that shear loads stay in the composite skin structure. Additionally, the composite resin window frame skin is able to carry the hoop load and is therefore more weight efficient for that reason as well.

To provide this functionality, the composite resin window frame assembly relies on the strength of a composite fuselage skin and stringers loaded with and retaining the frame and window.

The present design for a composite resin window frame does not require the upstanding reinforcement leg used in prior art frames. The new design was achieved by performing load analyses on the new frame, whereby it has been discovered that the conventional upstanding leg or flange is unnecessary to stabilize the skin. The load can instead be stabilized through use of a thicker composite resin skin in proximity to the window aperture.

Consequently, removal of the upstanding leg has resulted in the aforementioned benefits, particularly a significant reduction in the weight of the window frame while simplifying the frame manufacturing process.

### SUMMARY

A composite resin window frame for installation in a composite resin airplane fuselage and a method of manufacturing it is provided, according to claims 1 and 12 respectively. The frame has an inner flange for receiving and securely affixing an aircraft window pane and an outer flange adapted for connection to an airplane fuselage structure. The composite resin frame is sufficiently strong that additional strength enhancing members such as the upstanding leg or flange structures seen in the prior art are unnecessary. Without a perpendicular reinforcement member such as an upstanding leg or flange, the subject frame in a typical installation has a generally flat configuration, a generally oval shape, overall dimensions across the frame of about 50-60cm in the long dimension and about 35-40cm in the narrower dimension and a cross-sectional thickness of, approximately, 0.3 to 0.6 cm and a cross-sectional width of approximately 5.5 to 6.0 cm as measured from its inner flange edge to the outer flange edge. Such a composite resin window frame will securely affix a window pane to a composite resin fuselage and carry compression, tension and shear forces it may experience and transmit these to the composite resin fuselage.

The composite resin window frame is made from a combination of reinforcing fibers in a curable resin matrix. The curable resin matrix is usually a thermoplastic resin or a thermosetting resin. A typical curable resin matrix is epoxy resin combined with carbon or glass reinforcing fibers or mixtures.

The composite resin window frame may be combined with other elements to provide a window frame assembly for an airplane. The composite resin window frame may have one or more airplane window panes affixed to its inner flange, the frame and window combination may be installed in a window aperture of an airplane fuselage, and the outer flange of the frame may be securely affixed to the composite fuselage. This carries and transmits all of the loads it experiences to the composite resin fuselage.

Although the window pane may be a single pane, it is often a laminate of two or more individual panes. A typical window pane may be a stretched acrylic pane. The window pane may be affixed to the inner flange of the composite window frame by means of conventional retaining clips and a suitable seal. The outer flange of the composite resin window frame may be affixed to the composite fuselage of the airplane by means of conventional mechanical fasteners.

A method of manufacturing the composite resin window frame involves loading a composite matrix of curable plastic resin and reinforcing fiber material in a frame molding tool of predetermined shape and dimension and molding the composite resin frame, usually with sufficient heat and pressure, to cure the molded part which may then be cooled to provide the composite resin window frame part.

Suitable manufacturing processes include prepreg hand lay-up processes, as well as any processes selected from hot drape forming, tape lamination, fabrication with sheet molding compound, tow tape placement, slit tape placement, resin transfer molding, liquid resin infusion, resin film infusion, bulk resin infusion, reinforced thermal plastic lamination, resin injection molding, compression molding, resin transfer molding and the like.

Also contemplated is a manufacturing method in which the frame-molding tool is preloaded with a pre-fabricated insert. Such inserts would include a resin matrix insert, a metallic insert or a metal-composite hybrid insert.

### DRAWINGS-FIGURES

Figure 1 is a plan view of the composite resin window frame.
Figure 2 is an end elevation view of the composite resin window frame of Figure 1.
Figure 3 is a side elevation view of the composite resin window frame of Figure 1.
Figure 4 is a cross-sectional view of the composite resin window frame of Figure 1, at position i-i.
Figure 5 is a cross-sectional view of the composite resin window frame assembly.

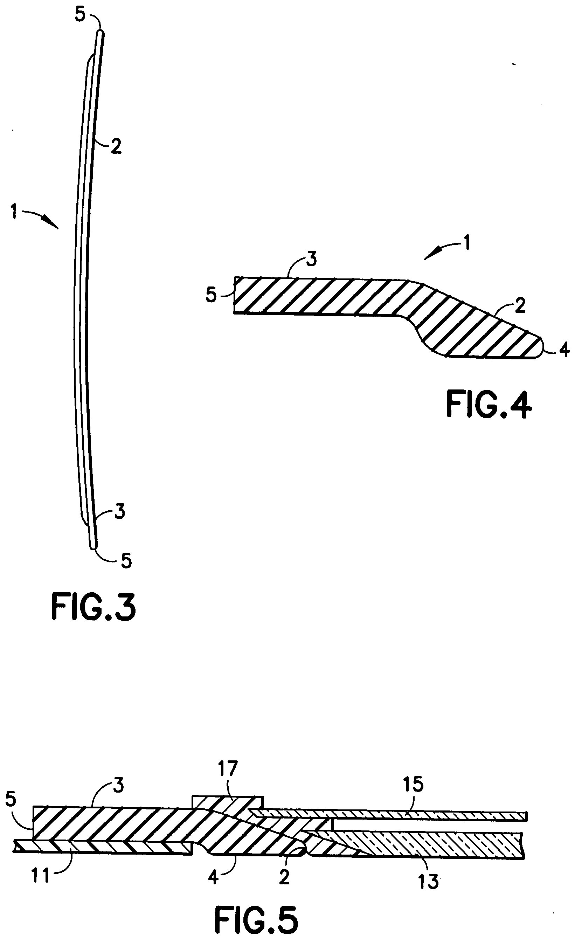

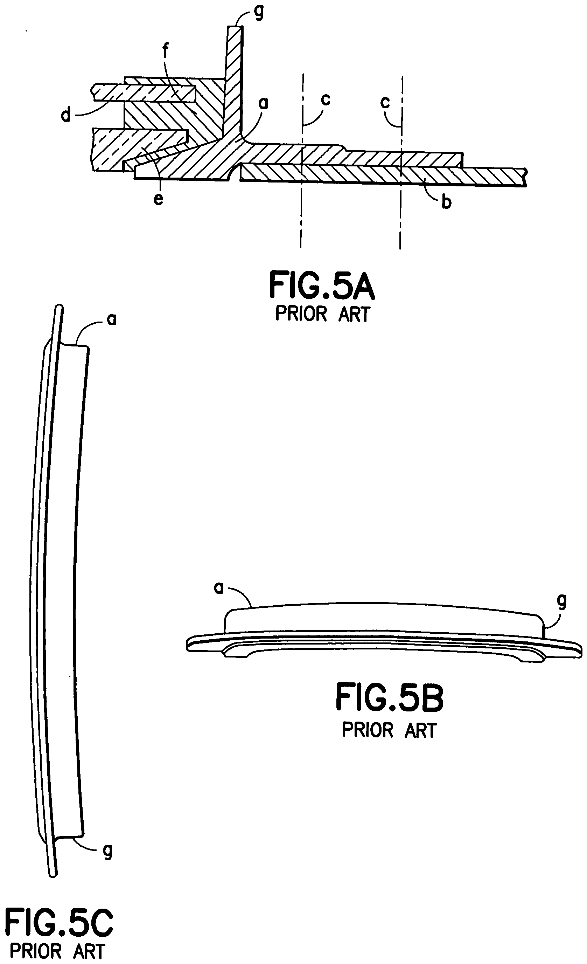

Prior Art Figures 5A, 5B and 5C depict prior art embodiments of a composite resin window frame having an upstanding reinforcement leg.

### DETAILED DESCRIPTION

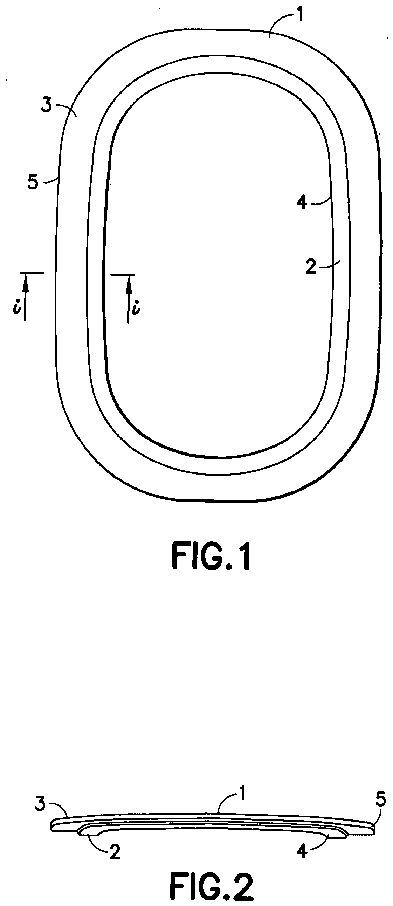

A composite resin window frame 1 is depicted in Figure 1. As is standard in the manufacture of airplanes, the composite window frame has a generally ovoid shape with typical overall dimensions of about 35-40 cm by 55-60 cm. Other shapes and sizes for a variety of fuselage apertures may be readily adapted in accordance with the present method. In Figure 1, inner flange 2 and inner flange edge 4 will retain a window pane with appropriate retaining clip and seal. Outer flange 3 having outer flange edge 5 is utilized to attach the composite resin frame 1 to an airplane fuselage assembly.

Figure 2 reveals the generally flatter and thinner aspects of composite resin window frame 1, particularly in comparison to Prior Art Figure 5B. Upstanding leg or flange structure g in the prior art design of Figure 5B has been eliminated in composite resin window frame 1 of the present invention.

Figure 3 reveals the generally flatter and thinner aspects of composite resin window frame 1, particularly in comparison to Prior Art Figure 5C. Again it is readily apparent that the present composite window frame 1 has eliminated flange g in the prior art design of Figure 5C.

Figure 4 depicts a cross-sectional view of the composite resin window frame of Figure 1, at position i-i.

Figure 5 depicts a cross-sectional view of the composite resin window frame assembly wherein composite resin window frame 1 is adjoined to fuselage skin 11. Window panes 13 and 15 are attached to frame 1 by means of mechanical clips and seal 17. The window panes are preferably stretched acrylic or laminated stretch acrylic, but may also be single- or multi-pane glass or alternatives. Figures 2-5 each also depict inner flange 4 and inner flange edge 2 as well as outer flange 3 and outer flange edge 5.

Prior Art Figure 5A depicts the cross-section of a composite resin window frame construction a having vertical flange g, which the design of the present invention is designed to eliminate. Figure 5A also depicts fuselage skin b, fastened to the composite frame with rivets positioned as indicated by c. Window panes d and e are secured to the frame by means of sealant f.

Prior Art Figure 5B depicts an end elevation view of a window frame a having elongated flange g.

Prior Art Figure 5C depicts a side elevation view of a window frame a having elongated flange g.

The present invention recognizes that the airplane fuselage skin can be utilized to carry the loads associated with stresses induced by skin-piercing apertures in the fuselage, where the composite resin window frame carries the window pane and its associated load. The subject composite window frame design allows for a composite fuselage barrel to function effectively without the necessity for conventional strength enhancement, such as that provided in prior window frame designs utilizing the upstanding reinforcement leg discussed previously. The composite window frame relies on the strength of the composite fuselage skin and associated stringers to bear the necessary loads while retaining the window panes in place.

Stress and compression analyses confirmed that the present composite resin window frame design achieved successful results without resorting to the use of a conventional, strength-enhancing upstanding leg, thereby benefiting from both weight and cost savings. Furthermore, it will be recognized that the advantages provided by the subject composite resin window frame assembly would apply equally well to other apertures in the fuselage of an airplane. Another benefit of manufacturing the subject composite resin frame is that there is no need to scallop the fuselage skin for installation.

The composite resin window frame and assembly may be fabricated in accordance with the following procedures and several different material and manufacturing options may be utilized or combined. The manufacturing process described for the composite resin frame is not limited to any single composite manufacturing method, rather, any number of approaches can be used.

A composite window frame of the present design may be made of either thermosetting or thermoplastic resin. Also, many different reinforcing fibers can be used in the resin matrix including glass and carbon fibers or combinations of these or other fibers used to reinforce the composite matrix.

In accordance with conventional composite resin manufacturing techniques, the selected resin and reinforcing fibers can be combined ahead of time, as in a so-called prepreg hand lay-up process. Other suitable methods include hot drape forming, tape lamination, fabrication with sheet molding compound, tow or slit tape placement, resin transfer molding, liquid resin infusion, resin film infusion, bulk resin infusion and reinforced thermal plastic lamination. Alternatively, the resin and fibers can be combined during molding operations such as resin infusion, resin injection molding, compression molding or resin transfer molding. Those skilled in the art will recognize that the method presented may be readily modified to incorporate pre-fabricated inserts, metallic inserts, and inserts comprising metal/composite hybrid structures.

The manufacturing methods described above may be enhanced by utilizing stress analysis techniques to design, refine and fabricate a variety of suitable composite resin window frames for use in combination with a composite fuselage, thereby providing stronger window frames while saving weight and cost. Since the composite resin window frame relies on the strength of the composite fuselage skin and associated stringers to distribute the shear loads adequately while still retaining the window, the load stays in the composite skin.

A typical composite window frame of the present design will have a generally oval shape. Overall dimensions across the frame are about 55-60 cm in the long dimension and have a narrower dimension of about 35-40 cm. The composite frame has a width of about 5-6 cm in the region depicted by position i-i in Figure 1. Thus the cross-section depicted in Fig. 4 is about 0.60 cm thick, which is in marked contrast to the thickness of about 1.0 cm for the prior art window frame skin flange depicted in Fig. 5C and its 2.5 cm upstanding flange a. Composite resin frames for fuselage apertures of varying sizes can be readily fabricated with the present method of manufacture.

In one embodiment of the manufacturing process useful for producing the subject composite window frame, prepreg material is selected and cut to size for a particular part configuration, placed in a cure tool of desired shape and dimension and cured using heat and pressure.

An alternative method of fabrication involves tow prepreg or slit tape placement using an advanced fiber placement head which positions the prepreg in the molding tool and thereafter cures the resin composite using heat and pressure.

Another alternative method of fabrication involves resin transfer molding utilizing a dry fiber braid and resin. The braid is placed in a matched die tool; the resin is then injected into the tool and cured using heat and pressure. Another alternative method of fabrication involves liquid resin infusion wherein dry fiber braid is placed in the part tool;
the braid is infused with the resin and cured using heat and pressure. In a vacuum-assisted resin infusing method, dry woven graphite is preformed and positioned over inexpensive aluminum tooling prior to curing the frame.

Other alternative methods include liquid film infusion and bulk resin infusion wherein dry fiber braid is placed in the part tool, the braid is infused with the resin film and cured using heat and pressure.

A method of reinforced thermal plastic lamination involves cutting a thermal plastic prepreg blank to appropriate size, heating the blank in an oven, forming the hot blank in a press, cooling the part and removing it from the press. Alternatively, cut plies can be stacked and placed on a consolidation tool. Consolidation can then be accomplished with heat and pressure, as in an autoclave or press method.

The following examples illustrate the invention and are not intended to limit the general applicability of the subject method.

### EXAMPLE 1

A composite window frame of the present invention was made by compression molding the frame in a molding tool. The molding tool produced a composite window frame having the shape and dimensions of the frame depicted in Figures 1-4. Hexcel compression molding material HexMC AS4 fiber was chopped into pieces, fitted into the frame mold and combined with Hexcel 8552 curable epoxy resin. After molding, curing and cooling, a composite resin window frame was thereby produced.

### EXAMPLE 2

Another composite resin window frame part of similar size and shape was fabricated using an intermediate modulus compression molding material, Toray BMS 8-276 carbon fiber epoxy prepreg tape material in accordance with the manufacturer's instructions. After molding, curing and cooling, another composite resin window frame of the present invention was thereby produced.

### EXAMPLE 3

Composite resin window frames made in accordance with the foregoing examples were converted into window frame assemblies by combining each of the frames with acrylic panes by means of clips and a rubber seal and installing the combined assemblies in composite fuselage apertures of sufficient size to receive and complete an integrated frame-window-fuselage assembly. Stress and load analyses confirmed that the frames carried and transmitted the loads satisfactory to the surrounding fuselage skin structure.

## Claims

1. A single window, composite resin, aircraft window frame (1) for installation in a composite resin airplane fuselage, wherein said composite resin is a combination of reinforcing fibers in a curable resin matrix, said frame (1) comprising:
an inner flange (2,4) adapted for receiving and securely affixing an aircraft window pane (13,15); and
an outer flange (3,5) adapted for connection to the airplane fuselage structure;
said frame (1) having a generally flat configuration in the absence of a perpendicular reinforcement member, said frame (1) having sufficient strength to securely affix said aircraft window pane (13, 15) to said composite resin fuselage in the absence of any strength enhancing member, and wherein the said frame has a generally oval shape, overall dimensions across the frame of about 55-60cm in the long dimension and about 35-40cm in the narrower dimension with a cross-sectional thickness of, approximately, 0.3 to 0.6 cm and a cross-sectional width of approximately 5.5 to 6.0 cm measured from an inner flange edge (2,4) to an outer flange edge (3,5).

2. An aircraft window frame as in claim 1, wherein said curable resin matrix is a selected from a thermosetting plastic resin, or an epoxy resin.

3. An aircraft window frame as in claim 1, wherein said reinforcing fibers are selected from the group of carbon and glass fibers.

4. An aircraft window frame as in claim 1, wherein said frame (1) is manufactured by compression molding.

5. An aircraft window frame as in claim 1, wherein said frame (1) is manufactured by a prepreg hand lay-up method.

6. A single window, composite resin, aircraft window frame assembly comprising the aircraft window frame of claim 1 having one or more aircraft window panes (13,15) affixed to the inner flange (2,4), said frame and window pane combination installed in a window aperture of a composite airplane fuselage (11), whereby the outer flange (3,5) of said frame is securely affixed to said composite fuselage (11) and whereby said window frame (1) assembly carries and transmits its compression, shear and stress loads to said composite resin fuselage (11).

7. An aircraft window frame assembly as in claim 6, wherein said one or more aircraft window panes (13,15) comprises a laminate of two or more individual window panes (13,15).

8. An aircraft window frame assembly as in claim 6, wherein said one or more aircraft window panes (13,15) comprise a stretched acrylic pane.

9. An aircraft window frame assembly as in claim 6, wherein said one or more aircraft window panes (13,15) is affixed to said inner flange of said window frame (1) by means of a sealant.

10. An aircraft window frame assembly as in claim 9, wherein said sealant is rubber sealant.

11. An aircraft window frame assembly as in claim 6, wherein said outer flange (3,5) is affixed to the composite fuselage (11) of the airplane by means of mechanical fastening means.

12. A method of manufacturing the aircraft window frame (1) of any of claims 1-5, comprising the steps of:
a. providing a window frame molding tool having a predetermined shape and dimension, said molding tool thereby providing a composite resin window frame shape, the composite resin window frame shape providing an inner flange for receiving and securely affixing an aircraft window pane and an outer flange adapted for connection to the airplane fuselage, in the absence of any additional strength enhancing member,
b. loading a composite matrix of curable plastic resin and reinforcing fiber material in said window frame molding tool;
c. molding said composite resin frame with sufficient heat and pressure to cure said molded part; and
d. cooling said molded part to provide a composite resin window frame part.

## Patentansprüche

1. Verbundharz-Fensterrahmen (1) für ein einzelnes Fenster für Flugzeuge zum Einbau in einen Flugzeugrumpf aus Verbundharz, wobei das Verbundharz eine Kombination von verstärkenden Fasern in einer härtbaren Harzmatrix ist, wobei der Rahmen (1) aufweist:
einen inneren Flansch (2, 4), der dazu ausgebildet ist, eine Flugzeug-Fensterscheibe (13, 15) aufzunehmen und sicher zu befestigen, und
einen äußeren Flansch (3, 5), der zur Verbindung mit der Struktur des Flugzeugrumpfs ausgebildet ist,
wobei der Rahmen (1) einen allgemein flachen Aufbau besitzt, der kein senkrechtes Verstärkungselement aufweist, wobei der Rahmen (1) ausreichende Festigkeit besitzt, um die Flugzeug-Fensterscheibe (13, 15) ohne irgendein die Festigkeit verstärkendes Element sicher an dem Flugzeugrumpf aus Verbundharz zu befestigen, und wobei der Rahmen aufweist: eine allgemein ovale Form, allgemeine Abmessungen des Rahmens von etwa 55 - 60 cm in der Längsabmessung und etwa 35 - 40 cm in der schmaleren Abmessung mit einer Querschnittsdicke von ungefähr 0,3 bis 0,6 cm und einer Querschnittsbreite von ungefähr 5,5 bis 6,0 cm, gemessen von einem Rand des inneren Flansche (2, 4) zu einem Rand des äußeren Flansches (3, 5).

2. Flugzeug-Fensterrahmen wie in Anspruch 1, bei dem die härtbare Harzmatrix unter einem wärmehärtbaren Kunststoffharz oder einem Epoxyharz ausgewählt ist.

3. Flugzeug-Fensterrahmen wie in Anspruch 1, bei dem die verstärkenden Fasern aus der Gruppe der Carbonfasern und der Glasfasern ausgewählt sind.

4. Flugzeug-Fensterrahmen wie in Anspruch 1, wobei der Rahmen (1) durch Formpressen hergestellt ist.

5. Flugzeug-Fensterrahmen wie in Anspruch 1, wobei der Rahmen (1) durch ein Verfahren mit manuellem Auflegen von Prepregs hergestellt ist.

6. Flugzeug-Fensterrahmen-Aufbau aus Verbundharz für ein einzelnes Fenster, der den Flugzeug-Fensterrahmen von Anspruch 1 enthält, der eine oder mehrer Flugzeug-Fensterscheiben (13, 15) aufweist, die an dem inneren Flansch (2, 4) befestigt sind, wobei die Kombination aus Rahmen und Fensterscheibe in einer Fensteröffnung eines Flugzeugrumpfs (11) aus Verbundmaterial eingebaut ist, wobei der äußere Flansch (3, 5) des Rahmens sicher an dem Flugzeugrumpf (11) aus Verbundmaterial befestigt ist und wobei der Aufbau des Fensterrahmens (1) Druckbeanspruchungen, Scherbeanspruchungen und Spannungsbeanspruchungen aufnimmt und sie auf den Flugzeugrumpf (11) aus Verbundmaterial überträgt.

7. Flugzeug-Fensterrahmen-Aufbau wie in Anspruch 6, bei dem die eine Flugzeug-Fensterscheibe oder die mehreren Flugzeug-Fensterscheiben (13, 15) aus einem Laminat von zwei oder mehr individuellen Fensterscheiben (13, 15) bestehen.

8. Flugzeug-Fensterrahmen-Aufbau wie in Anspruch 6, bei dem die eine Flugzeug-Fensterscheibe oder die mehreren Flugzeug-Fensterscheiben (13, 15) Scheiben aus einem verstreckten Acrylharz sind.

9. Flugzeug-Fensterrahmen-Aufbau wie in Anspruch 6, bei dem die eine Flugzeug-Fensterscheibe oder die mehreren Flugzeug-Fensterscheiben (13, 15) durch ein Abdichtmittel an dem inneren Flansch des Fensterrahmens (1) befestigt sind.

10. Flugzeug-Fensterrahmen-Aufbau wie in Anspruch 9, bei dem das Abdichtmittel ein Gummi-Abdichtmittel ist.

11. Flugzeug-Fensterrahmen-Aufbau wie in Anspruch 6, bei dem der äußere Flansch (3,5) durch mechanische Befestigungsmittel an dem Flugzeugrumpf (11) aus Verbundmaterial befestigt ist.

12. Verfahren zur Herstellung des Flugzeug-Fensterrahmens (1) von einem der Ansprüche 1 - 5, das folgende Schritte umfasst:
a. Vorsehen eines Formwerkzeugs für Fensterrahmen mit vorgegebener Form und vorgegebener Abmessung, womit das Formwerkzeug die Form eines Fensterrahmens aus Verbundharz vorgibt, wobei die Form für Fensterrahmens aus Verbundharz einen inneren Flansch zum Aufnehmen und zur sicheren Befestigung einer Flugzeug-Fensterscheibe und einen äußeren Flansch ergibt, der zur Verbindung mit dem Flugzeugrumpf ausgebildet ist, wobei kein zusätzliches die Festigkeit erhöhendes Element vorgesehen ist,
b. Einführen einer Verbundmatrix aus einem härtbaren Kunststoffharz und verstärkendem Fasermaterial in das Fensterrahmen-Formwerkzeug,
c. Ausformen des Rahmens aus Verbundharz bei ausreichender Erwärmung und ausreichendem Druck zum Härten des Formteils und
d. Abkühlen des Formteils unter Erhalt eines Fensterrahmen-Teils aus Verbundmaterial.

## Revendications

1. Cadre de hublot d'avion, en résine composite, pour hublot unique (1) destiné à être installé dans un fuselage d'avion en résine composite, dans lequel ladite résine composite est une combinaison de fibres de renforcement dans une matrice de résine durcissable, ledit cadre (1) comprenant :
une bride interne (2, 4) adaptée pour recevoir et fixer, de manière solide, une vitre de hublot d'avion (13, 15) ; et
une bride externe (3, 5) adaptée pour le raccordement à la structure de fuselage d'avion ;
ledit cadre (1) ayant une configuration généralement plate en l'absence d'un élément de renforcement perpendiculaire, ledit cadre (1) ayant une résistance suffisante pour fixer, de manière solide, ladite vitre de hublot d'avion (13, 15) sur ledit fuselage en résine composite en absence de tout élément d'amélioration de résistance, et dans lequel ledit cadre a une forme généralement ovale, des dimensions globales d'un côté à l'autre du cadre d'environ 55-60 cm dans le sens de la longueur et d'environ 35-40 cm dans le sens le plus étroit avec une épaisseur transversale d'approximativement 0,3 à 0,6 cm et une largeur transversale d'approximativement 5,5 à 6,0 cm mesurée à partir d'un bord de bride interne (2, 4) jusqu'à un bord de bride externe (3, 5).

2. Cadre de hublot d'avion selon la revendication 1, dans lequel ladite matrice en résine durcissable est une résine sélectionnée parmi une résine plastique thermodurcissable ou une résine époxy.

3. Cadre de hublot d'avion selon la revendication 1, dans lequel lesdites fibres de renforcement sont sélectionnées dans le groupe comprenant les fibres de carbone et les fibres de verre.

4. Cadre de hublot d'avion selon la revendication 1, dans lequel ledit cadre (1) est fabriqué par moulage par compression.

5. Cadre de hublot d'avion selon la revendication 1, dans lequel ledit cadre (1) est fabriqué par un procédé de pose à la main de couches préimprégnées.

6. Ensemble de cadre de hublot d'avion en résine composite pour hublot unique comprenant le cadre de hublot d'avion selon la revendication 1, ayant une ou plusieurs vitres de hublot d'avion (13, 15) fixées sur la bride interne (2, 4), ladite combinaison de cadre et de vitre de hublot installée dans une ouverture de hublot d'un fuselage d'avion composite (11), moyennant quoi la bride externe (3, 5) dudit cadre est fixée, de manière solide, sur ledit fuselage composite (11) et moyennant quoi ledit ensemble de cadre de hublot (1) porte et transmet ses charges de compression, de cisaillement et de contrainte audit fuselage en résine composite (11).

7. Ensemble de cadre de hublot d'avion selon la revendication 6, dans lequel lesdites une ou plusieurs vitres de hublot d'avion (13, 15) comprennent un stratifié de deux vitres de hublot individuelles (13, 15) ou plus.

8. Ensemble de cadre de hublot d'avion selon la revendication 6, dans lequel les desdites une ou plusieurs vitres de hublot d'avion (13, 15) comprennent une vitre acrylique étirée.

9. Ensemble de cadre de hublot d'avion selon la revendication 6, dans lequel lesdites une ou plusieurs vitres de hublot d'avion (13, 15) sont fixées sur ladite bride interne dudit cadre de hublot (1) au moyen d'un agent d'étanchéité.

10. Ensemble de cadre de hublot d'avion selon la revendication 9, dans lequel ledit agent d'étanchéité est un agent d'étanchéité en caoutchouc.

11. Ensemble de cadre de hublot d'avion selon la revendication 6, dans lequel ladite bride externe (3, 5) est fixée sur le fuselage composite (11) de l'avion au moyen d'un moyen de fixation mécanique.

12. Procédé pour fabriquer un cadre de hublot d'avion (1) selon l'une quelconque des revendications 1 à 5, comprenant les étapes consistant à :
a. prévoir un outil de moulage de cadre de hublot ayant une forme et une dimension prédéterminée, ledit outil de moulage fournissant ainsi une forme de cadre de hublot en résine composite, la forme de cadre de hublot en résine composite fournissant une bride interne pour recevoir et fixer de manière solide une vitre de hublot d'avion et une bride externe adaptée pour le raccordement au fuselage d'avion, en l'absence de tout élément d'amélioration de résistance supplémentaire,
b. charger une matrice composite en résine de plastique durcissable et un matériau de fibre de renforcement dans ledit outil de moulage de cadre de hublot ;
c. mouler ledit cadre en résine composite avec une chaleur et une pression suffisante pour durcir ladite partie moulée ; et
d. faire refroidir ladite partie moulée pour fournir une partie de cadre de hublot en résine composite.
